# EUROPEAN PATENT APPLICATION

(11) **EP 4 738 314 A1**
(43) Date of publication of application: **06.05.2026**
(21) Application number: 25210315.5
(22) Date of filing: 22.10.2025
(51) Int. Cl.: G08G 5/26, B64D 45/06, G06F 16/00, G08G 5/53, G08G 5/55

(54) **AERONAUTICAL INFORMATION SERVICES DATA STANDARDIZATION SYSTEMS AND AERONAUTICAL INFORMATION SERVICES DATA STANDARDIZATION METHODS**

(30) Priority: 01.11.2024 US 202418934623
(71) Applicant: The Boeing Company, Arlington, VA 22202 (US)
(72) Inventor: SCHEUCHER, Wolfgang, ARLINGTON, 22202 (US); DOGADOVA, Polina, ARLINGTON, 22202 (US); SAHA, Kaushik, ARLINGTON, 22202 (US); PAYSEN, Jennifer, ARLINGTON, 22202 (US); HAMDI, Zied, ARLINGTON, 22202 (US)
(74) Representative: Plasseraud IP

(57) **Abstract**

An aeronautical navigation data standardization method comprising: receiving data sets of aeronautical navigation data from aeronautical navigation source providers "ANSPs"; identifying one or both of a type of the aeronautical navigation data in the data sets or the countries in which the ANSPs are located; selecting one or more data standardization cases for one or more of the data sets to change the aeronautical navigation data in the one or more of the data sets based on one or more previous detections of the type of the aeronautical navigation data or the countries for one or more previous changes to one or more previous data sets; and changing the aeronautical navigation data according to the one or more data standardization cases that are selected, one or both of a format or a syntax of the aeronautical navigation data being changed in the one or more of the data sets.

## Description

### FIELD OF THE DISCLOSURE

Examples of the present disclosure relate to receiving aeronautical data from different countries and standardizing the data into a common format for use in planning flights and/or controlling aircraft during flights.

### BACKGROUND OF THE DISCLOSURE

Digital aeronautical navigation data is information used by pilots and air traffic control prior to and during flights to ensure the flights are safe. This information can be used for planning flights, navigation (e.g., avoiding obstacles or other aircraft), performing emergency procedures during flights, and the like. This information can include electronic maps of airports, weather information, procedures for aircraft at airports, temporary hazards, air traffic control information, and the like.

Digital aeronautical navigation data such as Aeronautical Information Services (AIS) data are provided by Aeronautical Navigation Service Providers (ANSPs) from different countries in the form of digital data sets. While a globally accepted data model and data exchange standard exists for these data sets in form of the Aeronautical Information Exchange Model (AIXM), countries still provide the respective AIS data sets from those countries in each country's own version or "flavor" of AIXM, or in a completely different format, such as csv, xml, JSON, shape, etc.

Currently, most known digital data sources, although available, are not used in Boeing production systems, as the data is still provided or published also in paper format (i.e., as a section of the Aeronautical Information Publication (AIP), which can be retrieved in non-structured formats such as pdf and html). Some exceptions are obstacle data sets, known as eTOD (electronic Terrain and Obstacle Data), which by many countries are provided in digital format and which are then no longer published in the AIP. For these cases, a country specific data transformation may be applied in the Jeppesen production process to map and convert the data into the USF format, which then can be loaded into the Jeppesen Obstacle Database (JODA). For all other digital sources, e.g. AIP Data sets containing navigational data, no solution is currently in place that would utilize the advantages of processing digital data sources, such as improved data quality and reduced manual interaction with the data, as data verification by the user is not required in that case.

### SUMMARY OF THE DISCLOSURE

This disclosure relates to systems as per the appended claims, and to methods as per the appended claims.

By "aeronautical consumer systems", or more simply "consumer systems", we refer to systems, platforms, or applications that utilize aeronautical navigation data. Examples of aeronautical consumer systems include, but are not limited to: flight planning systems that assist in route selection and control, air traffic management "ATM" systems, air traffic control "ATC" systems, flight management systems "FMS", NOTAM (Notice to Airmen) systems for disseminating time-sensitive aeronautical information, Training and flight simulator, resource and aerodrome facility management systems, etc.

### BRIEF DESCRIPTION OF THE DRAWINGS

Figure 1 illustrates one example of an aeronautical navigation data standardization system;
Figure 2 illustrates a flowchart of one example of a method for standardizing aeronautical navigation data; and
Figure 3 illustrates one example of a machine learning/artificial intelligence system.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

One or more examples of the inventive subject matter described herein provide AIS data standardizer systems and methods that can examine AIS digital data sets from different countries, recognize non-standard elements in this source data, and transforms the non-standard data elements into a standard format that aligns with a predefined, common AIXM standard format. This standardized data can then be provided to data consumers according to the data requirements of the consumers, while avoiding standalone and manually maintained country-specific data processing solutions. For example, the AIS data standardization systems and methods can operate in a fully automated manner, thereby allowing for more frequent updates, larger data sets, etc. than some currently known systems and methods are capable of handling.

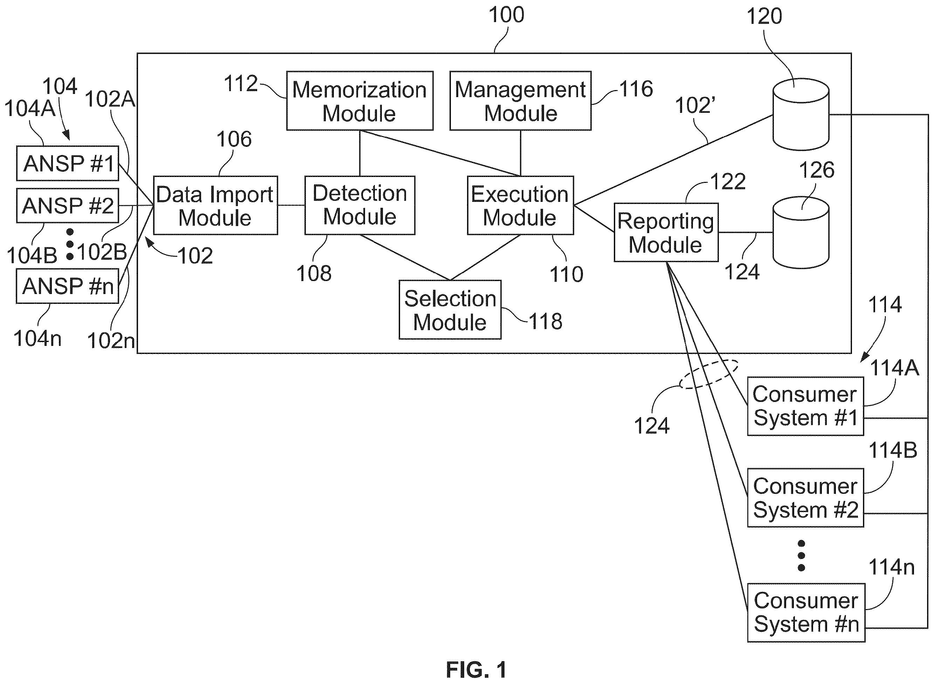

Figure 1 illustrates one example of an aerospace navigation data standardization system 100. The standardization system 100 receives different data sets 102 (e.g., data sets 102A, 102B, 102n) from different sources 104 (e.g., sources 104A, 104B, 104n). In the illustrated example, the sources 104 represent different ANSPs. For example, one source 104A may represent an ANSP in one country (e.g., Germany), another source 104B may represent another ANSP in another country (e.g., United States of America), another source 104n may represent another ANSP in another country (e.g., France), and so on. While three sources 104 are shown, alternatively, there may be fewer or more sources 104 providing data sets 102 to the standardization system 100.

The data sets 102 may include data features such as locations of navaids, routes, restrictions, airport-heliport locations, significant geographic points (i.e., waypoints and terminal points), runway locations, holding patterns, airspaces, airway locations and layouts, and the like.

The standardization system 100 includes several modules, each of which can represent hardware circuitry that includes and/or is connected with one or more processors (e.g., integrated circuits, field programmable gate arrays, microprocessors, application-specific integrated circuits, or the like) that perform the operations described in connection with the various modules. The modules may share one or more (or all) of the processors, or two or more modules may employ separate processors to perform the operations described in connection with the modules.

One of these modules is a data import module 106 that receives the data sets 102 from the ANSPs 104. The data import module 106 can include one or more modems, transceivers, or the like, which receive the data sets 102 from the ANSPs 104 via one or more computerized wired and/or wireless communication networks. The data sets 102 may be received on a periodic basis, such as once every two to three hours, several times a day, several times a week, and so on. In some examples, a data set 102 can be received that amends or modifies a previously submitted data set 102.

A detection module 108 can receive the data sets 102 from the import module 106. The detection module 108 identifies standardization cases to be applied on a received data set 102. For example, the detection module 108 can examine the data sets 102 that are received via the data import module 106 and identify the data source (e.g., the ANSP 104) that provided each of the data sets 102. The data sets 102 can include identifying information that identifies the country from which the ANSP 104 that sent the data set 102 is located, that identifies the ANSP 104 that sent the data set 102, or the like.

An execution module 110 can perform the data transformation on the provided data set 102. The execution module 110 can be the module that actually changes the source data in the data set 102 by applying defined procedures of a detected or selected AIXM standardization cases. For example, the execution module 110 can change the data in the data sets 102 by changing (adding or removing) spaces within text, numbers, and/or alphanumeric strings, can change the coding used to identify different waypoints, can change semantics of the data in the data sets 102, can change the geometry of one or more paths, airports, etc., represented in the data sets 102, etc.

The execution module 110 can change the data in the data sets 102 to a standard format. The execution module 110 can select (or be instructed by a memorization module 112 described herein) a standardization case for applying to each data set 102. The different standardization cases can include normalization, standardization, or extension. The normalization case can be selected by the execution module 110 and/or the memorization module 112 to change the structure or content of the format of the data (e.g., the AIXM data), but not change semantics of the data. The format of data can define the structure and organization of the data, such as the arrangement and representation of elements within the data. Different data formats can define the syntax of the data, such as the rules and conventions for writing and/or encoding the data in the different formats. Examples of different data formats can include csv, json, xml, pdf, and the like. The semantics of the data can define the meaning or interpretation of the data, such as the significance of different elements within the data. The semantics of data also can provide a framework for understanding relationships between different elements within the data. For example, a data set in the csv format may include semantic information about the meanings of different portions (e.g., columns, groups, etc.) of the data. Conversely, the standardization case can be selected by the execution module 110 and/or memorization module 112 to change semantics of the data in the data set 102. The extension case can be selected by the execution module 110 and/or memorization module 112 to store data in the data sets 102 which are not covered by the AIXM standard and, in some examples, add additional AIXM specific features, properties, and relationships.

The standardization case may be defined for different levels. At one level, a general standardization may be applied for all data sets 102, regardless of the ANSPs 104 or the countries of the ANSPs 104 that are the sources of the data set 102. At another level, a country-specific standardization may be applied for data sets 102 based on which countries the data sets 102 originated from (e.g., where the ANSPs 104 that provided the data sets 102 are located). Different standardization changes can be applied to data sets 102 from different countries. For example, data sets 102 from a first country may be modified in a first way, while data sets 102 from a different, second country are modified in a different, second way, and so on. If a country includes multiple ANSPs 104 providing different data sets 102, then the same country-specific standardization can be applied to all data sets 102 from those ANSPs 104. At another level, a data set type specific standardization can be applied. This type of standardization can be applied to a specific type of data set 102. For example, data sets 102 having information on obstacles (e.g., obstacle data sets) may have a first type of modification applied to the data sets 102, while data sets 102 having information on waypoints (e.g., waypoint data sets) may have a different, second type of modification applied to the data sets 102. The same type of data set type specific standardization may be applied to data sets 102 having the same type of information, regardless of the countries in which the source ANSPs 104 of the data sets 102 are located.

The different standardization cases can be identified by a unique identifier known to the memorization module 112 and the execution module 110. The different standardization cases can include metadata associated with the standardization changes to be applied to the data sets 102 modified by the respective cases, as well as include a problem statement, justification for the changes being made, details on the data transformation process, and one or more examples of the changes that are made to the data.

With respect to the normalization group of standardization cases, a namespace standardization can be applied to data sets 102 regardless of the countries from which the ANSPs 104 providing the data sets 102 are located (e.g., the standardization is not country specific) and regardless of the type of data set being standardized (e.g., the standardization is not data set specific). The namespace standardization can change a set of signs (e.g., names) used to identify and refer to objects of various kinds within the data set 102. A namespace can help ensure objects or elements within the data set 102 have unique names so that the objects or elements can be easily identified and distinguished from each other. The namespace standardization can change the data by appending a version of the AIXM standard to the data. For example, the ANSP 104 that provided a data set 102 may be using or may have reported using (to the execution module 110) that the data set 102 was created using AIXM version 5.1.1. In some examples, the execution module 110 may determine the version of AIXM that the execution module 110 and/or one or more consumer systems 114 (e.g., consumer systems 114A, 114B, 114n) are using. The consumer systems 114 can represent navigation databases or systems, flight planning systems, airport mapping databases, chart production systems, flight data processing systems, obstacle databases, procedure design systems, airspace planning systems, NOTAM Systems, AIS Systems, etc. that use the data sets 102 (after standardization) for planning or scheduling flights, resources at airports, air traffic control, etc.

For example, the data set 102 may include an entry "xmins:aixm="http://www.aixm.aero/schema/5.1.1". This data entry (or element, or object) can be standardized by the execution module 110 changing the data entry to "xmlns:aixm-5.1.1="http://www.aixm.aero/schema/5.1.1". This change involves adding the AIXM version number after the string "aixm."

A feature referencing standardization of the normalization group of standardization cases can be applied to data sets 102 without being country specific or data set specific. This standardization can find local references between features in the data set 102, such as an xlink:href reference to a gml:id attribute, and resolve these local references by using abstract references to universally unique identifiers (UUIDs) of AIXM. For example, the data set 102 may include an entry "aixm:obstacle xlink:href="#uuid.01dec353-alb0-4156...," but can change this to aixm-5.1.1:obstacle xlink:href="urn:uuid:dd8dff39..." to refer to the UUID instead of the local reference or identifier within the data set 102.

A clear data value standardization of the general standardization group of cases can be applied to data sets 102 without being country specific or data set specific. This standardization can map AIXM schema codelist values where these values are missing from the data set 102. For example, if a data set 102 has certain data entries (e.g., "OTHER") that are not standard to the AIXM schema, then this standardization case can remove all "OTHER" values from the data set 102.

A consolidation standardization of the general standardization group of cases can be applied to data sets 102 without being country specific but can be applied to certain data sets (e.g., the standardization is data set specific). This standardization can be applied to data sets 102 storing information on obstacles to aircraft. The standardization can add information to data sets 102 having limited information, such as the type of obstacle (e.g., property type), when that information is missing from the data sets 102.

An alignment standardization of the general standardization group of cases can be applied to data sets 102 without being country specific or data set specific. This standardization can correct coding of data features in the data sets 102 that are incorrect according to AIXM Coding Guidelines. For example, a data entry for a take off flight path area may be encoded as OTHER: TAKEOFFFLIGHTPATHAREA, which is incorrect or does not follow AIXM Coding Guidelines. The execution module 110 can change this data entry to OTHER: TAKE_OFF_FLIGHT_PATH_AREA to conform to those coding guidelines.

A create part designator standardization of the general standardization group of cases can be applied to data sets 102 from a particular country (e.g., Austria or Norway) and for data sets 102 containing information on obstacles. Some ANSPs 104 may not provide designator values to vertical structures identified in data sets 102. This standardization can be used by the execution module 110 to add values to data entries related to a multi-part obstacles to indicate that the multiple obstacles are different parts of the same multi-part obstacle. Otherwise, the designations of the obstacles in the data sets 102 may be duplicated or unable to be imported into systems of the consumers 114.

A base elevation standardization can be applied to data sets 102 from a particular country (e.g., Austria) and for data sets 102 containing information on obstacles. Data sets 102 can include elevations of various obstacles to communicate how high these obstacles extend to assist with flight planning to avoid collision with the obstacles. Some ANSPs 104 may provide these elevations as the base elevation of an obstacle, and not the upper or topmost elevation of the obstacle. This standardization can be used by the execution module 110 to add information (e.g., text) to obstacle elevations to indicate that the provided elevation is the base, and not the top, of the obstacle. This added information can assist consumers 114 with understanding what the obstacle elevations in the data sets 102 mean.

The memorization module 112 can memorize which AIXM standardizations were already performed on the data sets 102. For example, the memorization module 112 can examine what standardization cases were applied to data sets 102 containing data of a certain type (e.g., obstacles, airports, runways, etc.) and/or data sets 102 from ANSPs 104 in certain countries. The memorization module 112 can learn from prior standardization cases and continue to automatically apply the same standardization cases when future data sets 102 are received from the same ANSP 104 and/or containing the same type of data as before. For example, if a first data set 102 includes airport information from an ANSP 104 in a first country and a first set of standardization cases are applied to the first data set 102 by the execution module 110, then the memorization module 112 can direct the execution module 110 to apply the same first set of standardization cases to a second data set 102 containing airport information and/or received from the same country. But the memorization module 112 can direct the execution module 110 to apply a different second set of standardization cases to a third data set 102 that either includes different information (e.g., waypoint information) or that is received from an ANSP 104 in a different, second country.

A management module 116 can be used to control which standardization cases are (or are not) applied to different data sets 102. For example, some standardization cases can be deactivated or turned off so that the standardization cases are no longer applied, or activated or turned on so that the standardization cases are applied to data sets 102. The standardization cases can be deactivated or activated based on user input, or based on the detection of one or more errors. For example, the consumer systems 114 can provide feedback to the management module 116 that indicates errors in the data sets 102. The standardization cases that resulted in those errors can be automatically deactivated or manually deactivated.

Similarly, a selection module 118 can be used to control which standardization cases are (or are not) applied to different data sets 102. For example, a set or group of standardization cases can selected for being applied to the data sets 102 of a certain type (e.g., obstacles) and/or from a certain country. The selection module 118 can direct which standardization cases are to be applied to different data sets 102. The selection module 118 can select the standardization cases based on user feedback and/or feedback from the consumer systems 114. For example, the consumer systems 114 may send instructions to the selection module 118 (e.g., via a reporting module 122 and/or execution module 118 described herein) that dictate which standardization cases are to be applied to certain data sets 102 (e.g., data sets 102 containing certain types of information, data sets 102 from certain ANSPs 104, data sets 102 from ANSPs 104 in certain countries, etc.).

The execution module 110 can output one or more converted data sets 102' after applying one or more of the standardization cases to the data set(s) 102 received by the execution module 110. These converted data sets 102' can include modified data compared with the data sets 102, as described above. The converted data sets 102' can be output by the execution module 110 and recorded or saved into a database 120. The databases described herein can represent one or more tangible and non-transitory computer readable storage media, such as computer hard drives, removable drives, cloud drives, servers, etc. The converted data sets 102' can be stored for review and verification of the changes made by application of the standardization cases. In some examples, one or more of the consumer systems 114 can obtain the converted data sets 102' from the database 120.

A reporting module 122 can generate and store reports 124 that list the standardization cases applied to the data sets 102 (to create the converted data sets 102'). These reports 124 can be stored in another database 126 for review and verification, and/or to be accessed by the consumer systems 114. In some examples, the reporting module 122 can send the reports 124 and/or the converted data sets 102' to the consumer systems 114. The reporting module 122 can assist the consumer systems 114 with respect to validating and verifying the conversions of the data in the data sets 102 to the data sets 102'.

The standardization system 100 shown in Figure 1 may be part of a broader system, that further comprises one or more of the consumer systems 114.

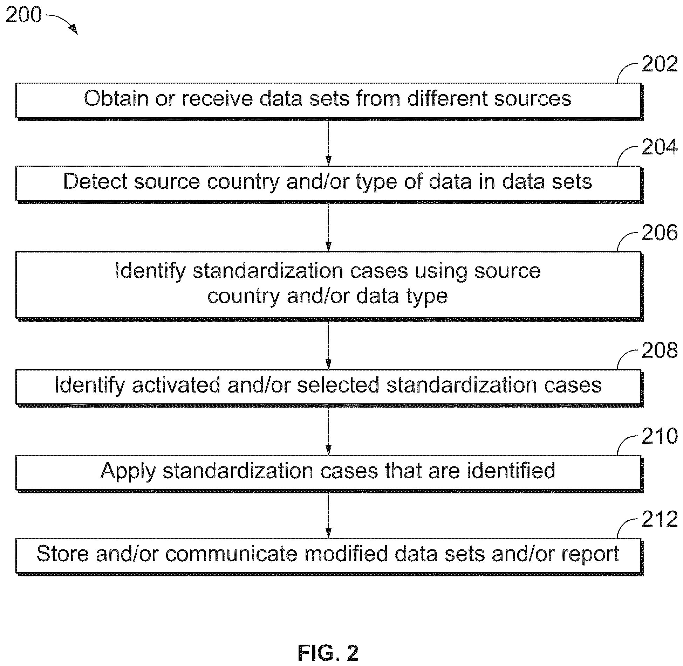

Figure 2 illustrates a flowchart of one example of a method 200 for standardizing data sets. The method 200 can represent operations performed by the standardization system 100. At 202, data sets are received from different sources. These data sets can include aeronautical navigation data and may be received from ANSPs in different countries, as described above. At 204, the source country or countries, as well as the type of data included in the data sets, are detected. For example, the ANSP that sent a data set may be known to be located in a particular country and/or the data set can be examined to identify the type of data included in the data set.

At 206, standardization cases to be applied to the data in the data set are identified. These standardization cases can be identified based on prior applications of data standardization cases. For example, the same standardization cases can be applied to data sets from ANSPs in the same country and/or to data sets containing the same type of data based on prior analysis of the data sets and application of the standardization cases. At 208, activated and/or selected standardization cases are identified. Some data standardization cases may be deactivated and are therefore not applied to the data sets. Other data standardization cases may be activated and applied to the data sets (if the cases are identified based on country and/or data type). Additionally, some standardization cases may be selected for application to the data sets (e.g., by the consumer systems or users of the standardization system).

At 210, the data standardization cases that are identified based on country and/or data type, which are activated (or that are not deactivated), and/or that are selected for application are applied to the data sets. This can change or convert the data, such as by changing the format and/or syntax of the data in the data sets. At 212, the data sets that are modified by application of the standardization cases can be stored in a database and/or communicated to consumer systems. Additionally, reports indicating the data standardization cases applied to the data sets can be generated, sent to the consumer systems, and/or stored in a database. This can allow for verification of the data modifications that were made.

The data sets that are changed can then be received by one or more aeronautical consumer systems, so that the one or more aeronautical consumer systems can plan flights and/or control aircraft using said the one or more data sets that are changed (e.g the standardized data sets). The aeronautical consumer systems can be of different types, and the data sets that are changed can be used in many different ways, few examples being described below.

One example of such use is the reception of the modified dataset by a Flight Management System "FMS" on board an aircraft, before or during a flight, so that the FMS can perform flight planning and/or control the aircraft during the flight using the modified data sets.

Another example of such use is the reception of the modified dataset by a flight planning system on ground, before or during a flight, so that the flight planning system can perform flight planning using the modified data sets and transmit the flight plans to aircrafts.

Yet Another example of such use is the reception of the modified dataset by an Air Traffic Control "ATC" system in order to perform Air Traffic Management using the modified data sets.

The standardization systems and methods described herein provide a technical solution to a technical problem, namely the ability to quickly, consistently, and accurately modify aeronautical navigation data sets to a standardized format even given large amounts of data and frequent updates of the data. Without the data standardization systems and methods described herein, the volume of data and frequency of updates to the data in aeronautical navigation data sets may be too much for humans to consistently modify without introducing human error into the data sets. Given the importance of accurate data in safely operating many aircraft concurrently flying near the same obstacles, airports, and the like, the standardization systems and methods provide a technical solution that helps ensure the safe operation of the aircraft even with large and frequent updates to the data sets. Furthermore, the aeronautical navigation data sets can be standardized and used for aeronautical navigation without a delay that would be introduced by user human supervision. Therefore, aeronautical navigation can be performed using accurate and standardized data as early as such data is published.

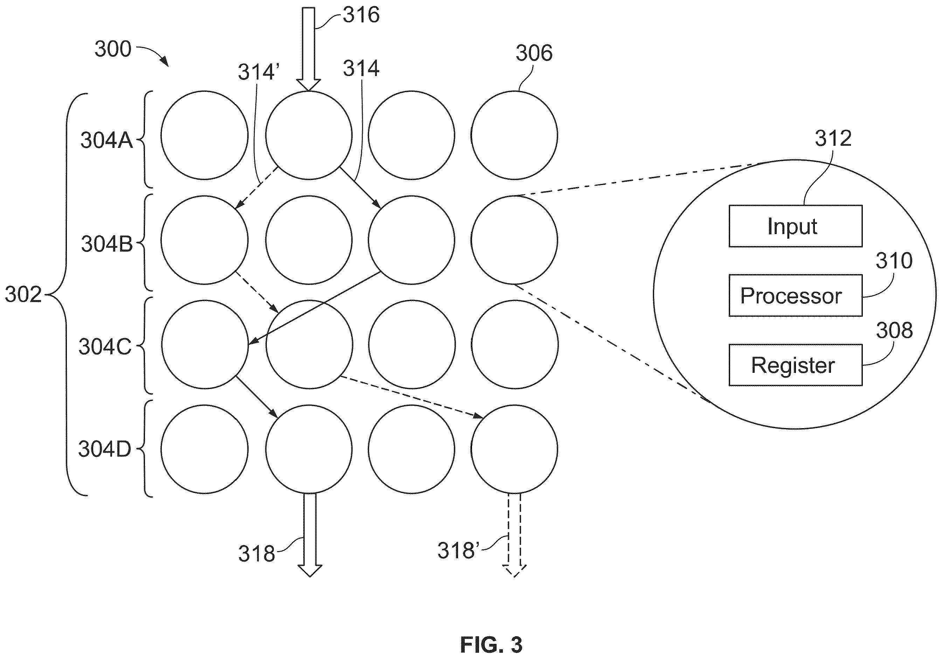

Figure 3 illustrates one example of a machine learning (ML)/artificial intelligence (AI) system 300. The ML/AI system 300 can represent one or more of the modules of the standardization system 100 shown in Figure 1, such as the memorization module 112. The ML/AI system 300 can be embodied in one or more application-specific integrated circuits (ASICs) for an artificial neural network (ANN). The ML/AI system 300 (or the ASIC(s)) can includes a series 302 of layers 304A-D, each comprising one or more artificial neurons 306 arranged in one or more neuron arrays or arrangements. While four neurons 306 are shown in each layer 304A-D and four layers 304A-D are shown, alternatively, a different number of neurons 306 may be in one or more of the layers 304A-D and/or there may be a different number of layers 304A-D.

The ML/AI system 300 may include the neurons 306 arranged in an input layer 304A, an output layer 304D, and two or more fully connected hidden or intermediate layers 304B, 304C between the input and output layers 304A, 304D. Each neuron 306 can include or represent a register 308, a microprocessor 310, and at least one input 312. The neurons 306 can generate outputs based on one or more activation functions. The neurons 306 can receive input from another neuron 306 (e.g., the output from one neuron 306 can be the input for another neuron 306). This input also can include a set of weights. The neurons 306 can be connected with each other via synaptic circuits 314, 314'. The synaptic circuits 314, 314' can include or represent memories for storing synaptic weights.

One or more neurons 306 in the input layer 304A of the ML/AI system 300 can receive an input 316 into the ML/AI system 300. The input 316 can include, for example, one or more of the data sets 102, an identification of the ANSP 104 that sent or otherwise provided the data set(s) 102, the country in which the ANSP 104 that sent or provided the data set(s) 102 is located), and/or the type of information included in the data set(s) 102. The neurons 306 can receive this input data 316 via the input(s) 312 of the neurons 306 in the input layer 304A. The neurons 306 receive the input data 316, apply one or more mathematical equations or relationships stored in the registers 308 (and that include the weights) to generate an output. The processors 310 of the neurons 306 apply the equations/relationships and can pass the output to another neuron 306 in the same layer 304A or in a different layer 304B, 304C. The output from one neuron 306 is passed along a synaptic circuit 314 to another neuron 306 and is used as input to this other neuron 306. This process continues until one or more neurons 306 in the output layer 304D generate an output 318 from the ML/AI system 300.

The synaptic circuits 314, 314', weights stored in the synaptic circuits 314, 314', and/or the mathematical relationships between the neurons 306 can define a model that is used to identify which standardization cases are to be applied to the data set(s) 102. For example, the AI/ML system 300 can examine the input data 316 and select which modifications to make to the data set(s) 102 based on training of the AI/ML system 300, which defines the synaptic circuits 314, 314', weights stored in the synaptic circuits 314, 314', and/or the mathematical relationships between the neurons 306.

During training of the AI/ML system 300, labeled data may be provided as the input data 316 to the AI/ML system 300. The labeled data can include standardization cases previously selected for modifying different data sets 102 and/or data sets 102 sent from ANSPs 104 in different countries. For example, the labeled data can identify what data standardization cases were applied to data sets 102 in the past. The neurons 306 process the input data 316 to generate the training output of the AI/ML system 300. This training output can identify which data standardization cases are to be applied to the data set(s) 102. This output can then be compared to data standardization cases selected for the data set(s) 102 (e.g., during a prior modification of the data set(s) 102 and/or as selected by a human analyst).

Feedback can be provided to the AI/ML system 300 in the form of a calculated error or other indication of the differences between the standardization cases selected by the AI/ML system 300 and the standardization cases that previously were applied to the data set(s) 102. Based on this error, the neurons 306 can change one or more of the synaptic circuits 314 that connect the neurons 306, the weights applied by one or more of the neurons 306, and/or the mathematical relationships between the neurons 306. For example, some synaptic circuits 314 can be changed to modified synaptic circuits 314' such that the same input 316 would result in different neurons 306 receiving input and passing output to other neurons and generating a different output 318' from the AI/ML system 300. As a result, changing one or more of these weights or relationships (e.g., synaptic circuits 314, 314') also can change which standardization cases are selected for applying to the data set(s) 102. Stated differently, the AI/ML system 300 learns which standardization cases to apply to the data set(s) 102 based on previous error.

After training the AI/ML system 300, the AI/ML system 300 can use the trained model(s) to select standardization cases for modifying data sets 102 as described herein. During post-training iterations of operation of the AI/ML system 300, additional feedback can be provided to the AI/ML system 300 based on errors in selection of standardization cases. For example, after training, an analyst may check which standardization cases are selected for different data sets 102 and provide feedback to the AI/ML system 300. The AI/ML system 300 can repeatedly receive such feedback, modify one or more weights and/or synaptic circuits, etc. so that the AI/ML system 300 repeatedly changes to improve and reduce error in selecting standardization cases to apply to data sets 102.

In contrast to some other solutions, the standardization systems and methods described herein allow for country-specific and/or data-specific data transformations without having to use stand-alone, separate workbenches or tools for the data transformation. This can avoid having to manually set up and configure each data transformation workbench separately (both for each country and for each data set). Whenever there is a change in the schema or structure of a data set provided by an ANSP, the standardization systems and methods may not require manual analysis and modification to accommodate the change. The modified data sets created by the standardization systems and methods provide for a consistent data standard usable by all consumer systems while avoiding manual examination and modification of data sets as the data sets are provided and/or updated. The data sets that are modified can be used to perform one or more operations. For example, a modified data set can be used to plan a flight and/or control an aircraft during a flight.

Further, the disclosure comprises examples according to the following clauses:

Clause 1: An aeronautical navigation data standardization system comprising modules formed from hardware circuitry and one or more processors, the modules including: a data import module configured to receive data sets of aeronautical navigation data from ANSPs located in different countries; a detection module configured to examine the data sets and identify one or both of a type of the aeronautical navigation data in the data sets or the countries in which the ANSPs are located; a memorization module configured to select one or more data standardization cases to one or more of the data sets to change the aeronautical navigation data in the one or more of the data sets based on one or more previous detections of the type of the aeronautical navigation data or the countries for one or more previous changes to one or more previous data sets; and an execution module configured to change the aeronautical navigation data according to the one or more data standardization cases that are selected, the execution module configured to change one or both of a format or a syntax of the aeronautical navigation data in the one or more of the data sets.

Clause 2: The aeronautical navigation data standardization system of any of the other Clauses, wherein the modules also include a reporting module configured to send the one or more data sets that are changed to one or more aeronautical consumer systems for use in planning flights or controlling aircraft, for example. The data sets may be used for producing or creating of aeronautical charts, updating on-board navigation databases for use in controlling flight of aircraft, updating or running training or flight simulators, updating or controlling synthetic vision systems, creating alerts from ground proximity warning systems and minimum safe altitude warning (MSAW) systems, determining determination of contingency procedures for use in the event of an emergency during a missed approach or take-off, analysis of aircraft operating limitations, designing aircraft instrument procedures (including circling procedures), determining en-route "drift-down" procedures and en-route emergency landing locations, surface guidance and navigation (e.g. A-SMGCS), traffic awareness including surveillance and runway incursion detection and alerting, managing resources and aerodrome facilities, facilitation of aerodrome-, terminal- and enroute related aeronautical information, including NOTAM, or the like.

Clause 3: The aeronautical navigation data standardization system of any of the other Clauses, wherein the modules also include a reporting module configured to create and store a report of the one or more data standardization cases that are selected and applied to change the format or the syntax of the aeronautical navigation data in the one or more of the data sets.

Clause 4: The aeronautical navigation data standardization system of any of the other Clauses, wherein the modules also include a selection module configured to select which of the data standardization cases are to be applied to the one or more data sets regardless of the type of the aeronautical navigation data or the countries of the ANSPs that provided the one or more data sets.

Clause 5: The aeronautical navigation data standardization system of any of the other Clauses, further comprising: a management module configured to selectively deactivate one or more of the data standardization cases and prevent the one or more of the data standardization cases that are deactivated from being used to change the format or the syntax of the aeronautical navigation data in the one or more of the data sets.

Clause 6: The aeronautical navigation data standardization system of any of the other Clauses, wherein the aeronautical navigation data in the data sets includes one or more of navaids, landing systems, satellite navigation systems, radar systems, aeronautical ground lights, routes, cruise tables, flight restrictions, airports, heliports, seaports, aprons, taxiways, lightings, markings, signs, gates, waypoints, landing areas, surface contaminations, holding patterns, terminal procedures, minimum and emergency safe altitude, airspaces, grid MORAs, obstacles, surface assessments areas, aeronautical authorities, airport ground services, traffic separation and met services, information services, communication facilities, aerial refueling, aircraft and flight characteristics, rules and procedures, meteorological conditions, etc.

Clause 7: The aeronautical navigation data standardization system of any of the other Clauses, wherein the execution module is configured to apply the one or more data standardization cases to the aeronautical navigation data to change object names in the aeronautical navigation data, to add a universally unique identifier for one or more objects in the aeronautical navigation data, to remove values from the aeronautical navigation data, to add an object identifier to the aeronautical navigation data, or to change encoding of the aeronautical navigation data.

Clause 8: The aeronautical navigation standardization system of any of the other Clauses, wherein the hardware circuitry and the one or more processors of the modules include an ASIC for an ANN, the ASIC comprising: neurons organized in an array, each of the neurons including a register, a processing element, and at least one input; and synaptic circuits, each of the synaptic circuits including a memory for storing a synaptic weight, wherein each of the neurons is connected to at least one other of the neurons via at least one of the synaptic circuits, the processing elements of the neurons configured to select the one or more data standardization cases to apply to the one or more of the data sets based on prior selections of the one or more data standardization cases.

Clause 9: An aeronautical navigation data standardization method comprising: receiving data sets of aeronautical navigation data from ANSPs located in different countries; identifying one or both of a type of the aeronautical navigation data in the data sets or the countries in which the ANSPs are located; selecting one or more data standardization cases to one or more of the data sets to change the aeronautical navigation data in the one or more of the data sets based on one or more previous detections of the type of the aeronautical navigation data or the countries for one or more previous changes to one or more previous data sets; and changing the aeronautical navigation data according to the one or more data standardization cases that are selected, one or both of a format or a syntax of the aeronautical navigation data changed in the one or more of the data sets.

Clause 10: The aeronautical navigation data standardization method of any of the other Clauses, further comprising: sending the one or more data sets that are changed to one or more aeronautical consumer systems for use in planning flights or controlling aircraft, producing aeronautical charts, inclusion in on-board navigation databases, usage in training/flight simulators, usage in synthetic vision systems, usage in ground proximity warning systems and minimum safe altitude warning (MSAW) systems, determining contingency procedures for use in the event of an emergency during a missed approach or take-off, analysis of aircraft operating limitations, designing instrument procedures (including circling procedures), determining en-route "drift-down" procedure and en-route emergency landing locations, surface guidance and navigation (e.g. A-SMGCS), traffic awareness including surveillance and runway incursion detection and alerting, resource and aerodrome facility management; facilitation of aerodrome-, terminal- and enroute related aeronautical information, including NOTAM, etc.

Clause 11: The aeronautical navigation data standardization method of any of the other Clauses, further comprising: creating and storing a report of the one or more data standardization cases that are selected and applied to change the format or the syntax of the aeronautical navigation data in the one or more of the data sets.

Clause 12: The aeronautical navigation data standardization method of any of the other Clauses, further comprising: selecting which of the data standardization cases are to be applied to the one or more data sets regardless of the type of the aeronautical navigation data or the countries of the ANSPs that provided the one or more data sets.

Clause 13: The aeronautical navigation data standardization method of any of the other Clauses, further comprising: selectively deactivating one or more of the data standardization cases to prevent the one or more of the data standardization cases that are deactivated from being used to change the format or the syntax of the aeronautical navigation data in the one or more of the data sets.

Clause 14: The aeronautical navigation data standardization method of any of the other Clauses, wherein the aeronautical navigation data in the data sets includes one or more of, navaids, landing systems, satellite navigation systems, radar systems, aeronautical ground lights, routes, cruise tables, flight restrictions, airports, heliports, seaports, aprons, taxiways, lightings, markings, signs, gates, waypoints, landing areas, surface contaminations, holding patterns, terminal procedures, minimum and emergency safe altitude, airspaces, grid MORAs, obstacles, surface assessments areas, aeronautical authorities, airport ground services, traffic separation and met services, information services, communication facilities, aerial refueling, aircraft and flight characteristics, rules and procedures, meteorological conditions, etc.

Clause 15: The aeronautical navigation data standardization method of any of the other Clauses, wherein the one or more data standardization cases are applied to the aeronautical navigation data to change object names in the aeronautical navigation data, to add a universally unique identifier for one or more objects in the aeronautical navigation data, to remove values from the aeronautical navigation data, to add an object identifier to the aeronautical navigation data, or to change encoding of the aeronautical navigation data.

Clause 16: An aeronautical navigation data standardization system comprising: a data import module configured to receive data sets of aeronautical navigation data from ANSPs; a detection module configured to examine the data sets and identify a type of the aeronautical navigation data in the data sets; a memorization module configured to select one or more data standardization cases to one or more of the data sets to change the aeronautical navigation data in the one or more of the data sets based on one or more previous detections of the type of the aeronautical navigation data for one or more previous changes to one or more previous data sets; and an execution module configured to change the aeronautical navigation data according to the one or more data standardization cases that are selected, the execution module configured to change one or both of a format or a syntax of the aeronautical navigation data in the one or more of the data sets.

Clause 17: The aeronautical navigation data standardization system of any of the other Clauses, wherein the detection module also is configured to identify which country that the ANSPs that provided the one or more of the data sets is located in, the memorization module configured to select the one or more of the data standardization cases based also on the country that is identified.

Clause 18: The aeronautical navigation data standardization system of any of the other Clauses, further comprising: a reporting module configured to send the one or more data sets that are changed to one or more aeronautical consumer systems for use in planning flights or controlling aircraft, aeronautical chart production, on-board navigation databases, training/flight simulator; synthetic vision systems; ground proximity warning system and minimum safe altitude warning (MSAW) system; determination of contingency procedures for use in the event of an emergency during a missed approach or take-off; aircraft operating limitations analysis; instrument procedure design (including circling procedure); determination of en-route "drift-down" procedure and en-route emergency landing location; surface guidance and navigation (e.g. A-SMGCS); traffic awareness including surveillance and runway incursion detection and alerting, resource and aerodrome facility management; facilitation of aerodrome-, terminal- and enroute related aeronautical information, including NOTAM, etc.

Clause 19: The aeronautical navigation data standardization system of any of the other Clauses, wherein the aeronautical navigation data in the data sets includes one or more of navaids, landing systems, satellite navigation systems, radar systems, aeronautical ground lights, routes, cruise tables, flight restrictions, airports, heliports, seaports, aprons, taxiways, lightings, markings, signs, gates, waypoints, landing areas, surface contaminations, holding patterns, terminal procedures, minimum and emergency safe altitude, airspaces, grid MORAs, obstacles, surface assessments areas, aeronautical authorities, airport ground services, traffic separation and met services, information services, communication facilities, aerial refueling, aircraft and flight characteristics, rules and procedures, meteorological conditions, etc.

Clause 20: The aeronautical navigation data standardization system of any of the other Clauses, wherein the execution module is configured to apply the one or more data standardization cases to the aeronautical navigation data to change object names in the aeronautical navigation data, to add a universally unique identifier for one or more objects in the aeronautical navigation data, to remove values from the aeronautical navigation data, to add an object identifier to the aeronautical navigation data, or to change encoding of the aeronautical navigation data.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are examples. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims.

## Claims

1. An aeronautical navigation data standardization method (200) comprising:
receiving data sets (102) of aeronautical navigation data from aeronautical navigation source providers "ANSPs";
identifying one or both of a type of the aeronautical navigation data in the data sets (102) or the countries in which the ANSPs are located;
selecting one or more data standardization cases for one or more of the data sets (102) to change the aeronautical navigation data in the one or more of the data sets (102) based on one or more previous detections of the type of the aeronautical navigation data or the countries for one or more previous changes to one or more previous data sets (102); and
changing the aeronautical navigation data according to the one or more data standardization cases that are selected, one or both of a format or a syntax of the aeronautical navigation data being changed in the one or more of the data sets (102).

2. The aeronautical navigation data standardization method (200) of claim 1, wherein the ANSPs are located in different countries.

3. The aeronautical navigation data standardization method (200) of any one of the preceding claims, further comprising:
sending the one or more data sets that are changed (102') to one or more aeronautical consumer systems for use in one or more of planning flights and controlling aircraft.

4. The aeronautical navigation data standardization method (200) of any one of the preceding claims, further comprising:
creating and storing a report of the one or more data standardization cases that are selected and applied to change the format or the syntax of the aeronautical navigation data in the one or more of the data sets (102).

5. The aeronautical navigation data standardization method (200) of claim 4, dependent upon claim 3, further comprising sending said report to said one or more aeronautical consumer systems.

6. The aeronautical navigation data standardization method (200) of any of the preceding claims, further comprising:
selecting which of the data standardization cases are to be applied to the one or more data sets (102) regardless of the type of the aeronautical navigation data or the countries of the ANSPs that provided the one or more data sets (102).

7. The aeronautical navigation data standardization method (200) of any of the preceding claims, further comprising:
selectively deactivating one or more of the data standardization cases to prevent the one or more of the data standardization cases that are deactivated from being used to change the format or the syntax of the aeronautical navigation data in the one or more of the data sets (102).

8. The aeronautical navigation data standardization method (200) of any of the preceding claims, wherein the aeronautical navigation data in the data sets (102) includes one or more of navaids, landing systems, satellite navigation systems, radar systems, aeronautical ground lights, routes, cruise tables, flight restrictions, airports, heliports, seaports, aprons, taxiways, lightings, markings, signs, gates, waypoints, landing areas, surface contaminations, holding patterns, terminal procedures, minimum and emergency safe altitude, airspaces, grid MORAs, obstacles, surface assessments areas, aeronautical authorities, airport ground services, traffic separation and met services, information services, communication facilities, aerial refueling, aircraft and flight characteristics, rules and procedures, or meteorological conditions.

9. The aeronautical navigation data standardization method (200) of any of the preceding claims, wherein the one or more data standardization cases are applied to the aeronautical navigation data to change object names in the aeronautical navigation data, to add a universally unique identifier for one or more objects in the aeronautical navigation data, to remove values from the aeronautical navigation data, to add an object identifier to the aeronautical navigation data, or to change encoding of the aeronautical navigation data.

10. A method comprising:
- executing, by an aeronautical navigation data standardization system, the steps of the method according to any one of claims 3 to 9, dependent upon claim 3 ;
- receiving, by one or more aeronautical consumer systems (114), said one or more data sets that are changed (102') ;
- executing, by said one or more aeronautical consumer systems (114), one or more one or more of planning flights and controlling aircraft using said one or more data sets that are changed (102').

11. An aeronautical navigation data standardization system (100) comprising one or more modules to execute the steps of an aeronautical navigation data standardization method according to any one of claims 1 to 9.

12. The aeronautical navigation data standardization system (100) of claim 11, wherein the one or more modules are formed from hardware circuitry and one or more processors (310).

13. The aeronautical navigation standardization system of claim 12, wherein the hardware circuitry and the one or more processors (310) of the modules include an application-specific integrated circuit "ASIC" for an artificial neural network "ANN", the ASIC comprising:
neurons (306) organized in an array, each of the neurons (306) including a register, a processing element, and at least one input; and
synaptic circuits, each of the synaptic circuits including a memory for storing a synaptic weight, wherein each of the neurons (306) is connected to at least one other of the neurons (306) via at least one of the synaptic circuits, the processing elements of the neurons (306) configured to select the one or more data standardization cases to apply to the one or more of the data sets (102) based on prior selections of the one or more data standardization cases.

14. The aeronautical navigation data standardization system (100) of any claims 10 to 13, wherein the one or more modules include a reporting module (122) configured to send the one or more data sets that are changed (102') to one or more aeronautical consumer systems (114) for use in one or more of planning flights and controlling aircraft.

15. A system comprising:
- an aeronautical navigation standardization system of claim 14;
- one or more aeronautical consumer systems (114) configured to:
receive from the said aeronautical navigation standardization system the one or more data sets that are changed (102') ;
one or more of planning flights and controlling aircraft using said one or more data sets that are changed (102').
